# EUROPÄISCHE PATENTANMELDUNG

(11) **EP 3 751 031 A1**
(43) Veröffentlichungstag der Anmeldung: **16.12.2020**
(21) Anmeldenummer: 20178912.0
(22) Anmeldetag: 09.06.2020
(51) Int. Cl.: D01H 5/56

(54) **SPINNMASCHINE**

(30) Priorität: 14.06.2019 DE 102019116234
(71) Anmelder: Saurer Intelligent Technology AG, 9320 Arbon Thurgau (CH)
(72) Erfinder: Schiffers, Philipp, 41812 Erkelenz (DE); Uedinger, Lothar, 41068 Mönchengladbach (DE); Toepke, Heiko, 52499 Baesweiler (DE)
(74) Vertreter: Morgenthum-Neurode, Mirko

(57) **Zusammenfassung**

Die Erfindung betrifft eine Spinnmaschine mit mehreren Spinnstellen, mit einer Luftstromversorgungseinheit zur Bereitstellung von Druck- und/oder Saugluft an den Spinnstellen und einem sich entlang der Spinnstellen erstreckenden Streckwerkträger zur lösbaren Anordnung von Streckwerken an den Spinnstellen. Um eine Spinnmaschine bereitzustellen, die eine energieeffiziente Versorgung der Spinnstellen mit Druck- und/oder Saugluft ermöglicht, ist vorgesehen, dass der Streckwerkträger als längskanalisierter, mit der Luftstromversorgungseinheit in Strömungsverbindung stehender Rohrkörper ausgebildet ist, der den einzelnen Spinnstellen zugeordnete Anschlussöffnungen aufweist.

## Beschreibung

Die Erfindung betrifft eine Spinnmaschine mit mehreren Spinnstellen, mit
- einer Luftstromversorgungseinheit zur Bereitstellung von Druck- und/oder Saugluft an den Spinnstellen und
- einem sich entlang der Spinnstellen erstreckenden Streckwerkträger zur lösbaren Anordnung von Streckwerken an den Spinnstellen.

Spinnmaschinen der eingangs genannten Art weisen eine Vielzahl gleichartiger Spinnstellen auf, die unter anderem für ihre verschiedenen Prozesse zumindest zeitweise Saug- und/oder Druckluft benötigen, welche üblicherweise von einer oder mehrerer Luftstromversorgungseinheiten der Spinnmaschine bereitgestellt wird. Ohne Einschränkung der Allgemeingültigkeit wird der Einfachheit halber nachfolgend im Rahmen der Anmeldung nur von einer einzigen Luftstromversorgungseinheit gesprochen.

An Spinnmaschinen wird die Saugluft typischerweise z.B. für eine Fadenfang- und Reinigungsdüse genutzt, welche während des Spinnprozesses zum einen eine Reinigung von losen Partikeln bewirkt und andererseits eine Sicherheitsfunktion ausübt, den Unterfaden bei gewissen Fadenbrüchen einzufangen. Die Fadenfang- und Reinigungsdüse wird also zumindest während des regulären Betriebs kontinuierlich mit Saugluft versorgt. Ebenso wird bspw. auch eine Rotortasse einer Offenend-Spinnmaschine während des regulären Spinnbetriebs aber auch während des Anspinnens mit Saugluft versorgt.

Bei bestimmten Spinnmaschinentypen, insbesondere Luftspinnmaschinen, bei denen die Herstellung eines Garns aus einem strangförmigen Fasermaterial mit Hilfe einer durch Luftdüsen innerhalb einer Wirbelkammer erzeugten Wirbelluftströmung erfolgt, dient ein Streckwerk als Liefervorrichtung für das strangförmige Fasermaterial. Im Falle einer Luftspinnmaschine ist das Streckwerk einer Spinndüse in Spinnrichtung vorgelagert und das Fasermaterial wird durch ein Ausgangswalzenpaar des Streckwerks in Richtung einer Einlassöffnung einer Spinndüse gefördert und von dieser durch Unterdruck angesaugt.

Eine kontinuierliche Versorgung der Spinnmaschinen bzw. der Arbeitsorgane der Spinnmaschinen einschließlich ggf. verwendeter Streckwerke mit Saug- und/oder Druckluft ist für eine gleichbleibende Qualität des herzustellenden Garns von hoher Bedeutung. Aufgrund der jedoch langen und insbesondere abgewinkelt verlaufenden Leitungswege ist es derzeit erforderlich, Luftstromversorgungseinheiten zu verwenden, welche einen hohen Energiebedarf aufweisen, um die für den reibungslosen Betrieb der Spinnmaschine notwendige Druck- und/oder Saugluft bereitzustellen, wobei insbesondere abgewinkelte Leitungen und abgeknickt verlaufende Abzweigungen die Luftströmung in negativer Weise beeinflussen.

Hiervon ausgehend liegt der Erfindung die Aufgabe zugrunde, eine Spinnmaschine bereitzustellen, die eine energieeffiziente Versorgung der Spinnstellen mit Druck- und/oder Saugluft ermöglicht.

Die Erfindung löst die Aufgabe durch eine Spinnmaschine mit den Merkmalen des Anspruchs 1. Vorteilhafte Weiterbildungen der Erfindung sind in den abhängigen Ansprüchen 2 bis 7 wiedergegeben.

Kennzeichnend für die erfindungsgemäße Spinnmaschine ist, dass der Streckwerkträger als längskanalisierter, mit der Luftstromversorgungseinheit in Strömungsverbindung stehender Rohrkörper ausgebildet ist, der den einzelnen Spinnstellen zugeordnete Anschlussöffnungen aufweist.

Der Streckwerkträger, welcher sich entlang der Spinnstellen erstreckt und welcher zur lösbaren Aufnahme der Streckwerke an den Spinnstellen ausgebildet ist, ist erfindungsgemäß als längskanalisierter Rohrkörper ausgebildet, sodass durch diesen die Druck- und/oder Saugluft zu den einzelnen Spinnstellen, insbesondere den Streckwerken geleitet werden kann. Der Rohrkörper ist hierzu strömungsdicht mit der Luftstromversorgungseinheit verbunden, sodass die durch die Luftstromversorgungseinheit bereitgestellte Druck- und/oder Saugluft direkt in den Längskanal des Rohrkörpers geleitet wird. Zur Bereitstellung der Druck- und/oder Saugluft an den einzelnen Spinnstellen weist der Rohrkörper im Bereich der Spinnstellen einzelne Anschlussöffnungen auf, über die die Spinnstellen und/oder das Streckwerk mit Druck- und/oder Saugluft versorgt werden kann.

Durch die erfindungsgemäße Ausgestaltung des Streckwerkträgers als längskanalisierter Rohrkörper kann dieser sowohl zur lösbaren Anordnung der Streckwerke an den Spinnstellen als auch zur energieeffizienten Versorgung der Spinnstellen, insbesondere der Streckwerke mit Druck- und/oder Saugluft verwendet werden. Von besonderem Vorteil für eine energieeffiziente Versorgung mit Druck- und/oder Saugluft ist dabei der Umstand, dass sich der Streckwerkträger gleichbleibend ohne Umlenkungen des Luftstroms durch eine abknickende Leitungsführung entlang einer Längsachse entlang der Spinnstellen erstreckt. Ein Druckverlust bzw. eine Strömungsreduzierung, insbesondere aufgrund von turbulenten Strömungen durch eine Knicke aufweisende Leitungsführung wird somit zuverlässig vermieden, da der Luftstrom entlang der Spinnstellen geradlinig innerhalb des Rohrkörpers verläuft, wo er an den einzelnen Spinnstellen zur Verfügung gestellt wird.

Die erfindungsgemäße Verwendung des Streckwerkträgers zur Versorgung der Spinnstellen mit Druck- und/oder Saugluft ermöglicht es auf die Verwendung von aus dem Stand der Technik bekannten, sich vielfach abzweigenden Leitungen zu verzichten, sodass gegenüber den aus dem Stand der Technik bekannten Spinnmaschinen Luftstromversorgungseinheiten mit einem geringeren Energiebedarf verwendet werden können. Ferner verhindert der sich in Längsachsenrichtung erstreckende Rohrkörper die Ablagerung von Verschmutzung innerhalb des Rohrkörpers, welche sich üblicherweise nur im Bereich der Knicke von abgeknickten Leitungen ablagern. Die Verwendung des Streckwerkträgers als Versorgungsleitung der Spinnstellen mit Druck- und/oder Saugluft erlaubt es zudem, auf zusätzliche Leitungen zu verzichten. Der Streckwerkträger erfüllt erfindungsgemäß einer Doppelfunktion. Er dient sowohl der lösbaren Anordnung von Streckwerken als auch zur Versorgung der Spinnstellen mit Druck- und/oder Saugluft.

Die äußere Form des Rohrkörpers sowie der Querschnitt des Längskanals ist grundsätzlich frei wählbar. So kann die äußere Form des Rohrkörpers an die Anordnung der Streckwerke angepasst werden, wohingegen der Querschnitt des Längskanals an eine optimale Druck- und/oder Saugluftführung angepasst werden kann. Nach einer besonders vorteilhaften Ausgestaltung der Erfindung ist jedoch vorgesehen, dass der Rohrkörper und/oder der Längskanal einen kreisförmigen Querschnitt aufweisen. Insbesondere die Ausgestaltung des Rohrkörpers und des Längskanals mit einem kreisförmigen Querschnitt erlaubt eine besonders einfache und kostengünstige Herstellung des Streckwerkträgers als Rohrkörper. Eine kreisförmige Ausgestaltung der Außenseite des Rohrkörpers erlaubt es, die Streckwerke mit einer entsprechenden Aufnahme um den Rohrkörper herum aus einer Entnahmestellung in eine Montagestellung zu verschwenken. Ein kreisförmiger Querschnitt des Längskanals gewährleistet eine besonders gute Luftströmung innerhalb des Rohrkörpers.

Eine Druck- bzw. Volumenstromregelung kann grundsätzlich direkt an der Luftstromversorgungseinheit erfolgen. Gemäß einer besonders vorteilhaften Ausgestaltung der Erfindung ist jedoch eine mit der Luftstromversorgungseinheit verbundene Luftstromregelung vorgesehen. Die Verwendung einer separaten Luftstromregelung erlaubt es, diese in einem für einen Maschinenbediener gut zugänglichen Bereich anzuordnen. Anpassungen des Drucks- und/oder Volumenstroms der Luftstromversorgungseinheiten können so in komfortabler Weise ohne direkten Zugang zur Luftstromversorgungseinheit vorgenommen werden. Ferner ermöglicht die längskanalisierte Ausgestaltung des Rohrkörpers in bevorzugter Weise die Anordnung der Luftstromregelung in Längsachsenrichtung des Rohrkörpers oder in einem Abschnitt des längskanalisierten Rohrkörpers, womit zur Einbindung der Luftstromregelung in den Luftstromweg zwischen der Luftstromversorgungseinheit und der im Luftstromweg nachfolgende erste Anschlussöffnung auf ansonsten erforderliche Knicke oder Abzweigungen verzichtet werden kann.

Nach einer besonders vorteilhaften Ausgestaltung der Erfindung ist dabei vorgesehen, dass die Luftstromregelung in einem Gehäuse einer Spinnmaschinensteuereinheit angeordnet ist. Die Anordnung der Luftstromregelung in einer Spinnmaschinensteuereinheit, über welche eine Steuerung sämtlicher Spinnstellen der Spinnmaschine erfolgt, erlaubt es, auf ein separates Gehäuse für eine mit der Luftstromversorgungseinheit verbundenen Luftstromregelung zu verzichten. An der Spinnmaschinensteuereinheit können dann von einem Maschinenbediener sowohl Einstellungen an der Spinnmaschine sowie Einstellungen der Luftstromversorgungseinheit durchgeführt werden.

Grundsätzlich kann der Streckwerkträger als einteiliger Rohrkörper ausgebildet sein. Nach einer besonders vorteilhaften Ausgestaltung der Erfindung ist jedoch vorgesehen, dass der Rohrkörper mehrteilig, insbesondere zum Anschluss weiterer Rohrkörper ausgebildet ist. Diese Ausgestaltung der Erfindung erlaubt eine optimale Anpassung des Rohrkörpers an die Länge der Spinnmaschine. Insbesondere im Falle der Verfügbarkeit unterschiedlich langer, miteinander verbindbarer Rohrkörper lässt sich dieser in optimaler Weise an die Anzahl der Spinnstellen der Spinnmaschine bzw. an Spinnstellensegmente aufweisend eine definierte Anzahl an Spinnstellen anpassen. Eine Verbindung der Rohrkörper kann dabei bspw. über geeignete Schraub-, Klemm-, Steck- oder Rastverbindungen erfolgen.

Erfindungsgemäß weist der Rohrkörper den einzelnen Spinnstellen zugeordnete Anschlussöffnungen auf, über die an den Spinnstellen Druck- und/oder Saugluft bereitgestellt werden kann.

Nach einer besonders vorteilhaften Ausgestaltung ist vorgesehen, dass die Anschlussöffnung mit einer Anschlussleitung, insbesondere flexiblen Anschlussleitung zum strömungsdichten Anschluss der Spinnstellen, insbesondere des Streckwerkes an den Rohrkörper verbunden ist. Die Anordnung einer Anschlussleitung an der Anschlussöffnung, insbesondere einer flexiblen Anschlussleitung erlaubt einen besonders schnellen und einfachen Anschluss der Spinnstelle, insbesondere eines direkt an dem Rohrkörper angeordneten Streckwerks. Über die flexible Anschlussleitung können dabei insbesondere Positionsungenauigkeiten der Anschlussöffnungen gegenüber der Spinnstelle und/oder dem Streckwerk ausgeglichen werden.

Nach einer weiteren Ausgestaltung der Erfindung ist ferner vorgesehen, dass die Anschlussöffnungen mit Mitteln zur Regelung des Luftstroms durch die Anschlussöffnungen ausgebildet sind. Gemäß dieser Ausgestaltung der Erfindung besteht die Möglichkeit, die an den einzelnen Anschlussöffnungen bereitgestellte Druck- und/oder Saugluft individuell über die Mittel zu regeln. Hierbei kann es sich bspw. um einstellbare Blenden oder Schieberegler handeln, welche den Volumenstrom begrenzen. Diese Ausgestaltung erlaubt eine individuelle und optimale Anpassung der an den einzelnen Spinnstellen bereitgestellten Saug- und/oder Druckluft.

Ein Ausführungsbeispiel der Erfindung wird nachstehend mit Bezug auf die Zeichnungen erläutert. In den Zeichnungen zeigen:
- Fig. 1: eine prinzipielle Darstellung einer an einen als Rohrkörper ausgebildeten Streckwerkträger angeschlossenen Luftstromversorgungseinheit und
- Fig. 2: eine perspektivische Darstellung einer Spinnstelle mit an einem Streckwerkträger angeordnetem Streckwerk.

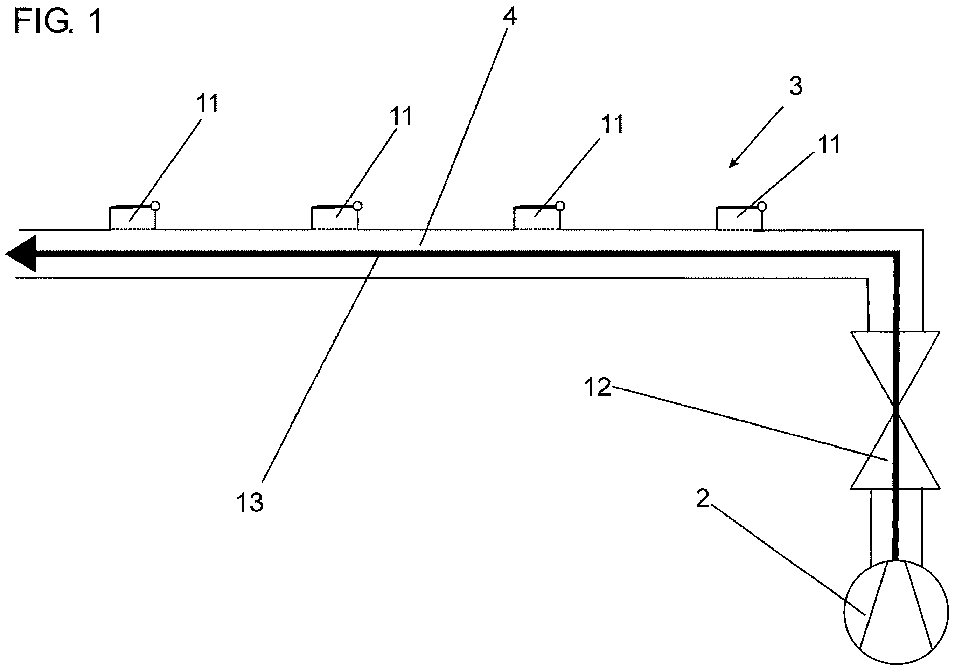

In Fig. 1 ist in einer schematischen Darstellung eine Luftstromversorgung einer mehrere Spinnstellen 1 aufweisenden Textilmaschine dargestellt. Die Quelle für den Luftstrom 13, bei der es sich um Druck- und/oder Saugluft handeln kann, bildet eine Luftstromversorgungseinheit 2. Diese ist über eine Luftstromregelung 12 an einen als Rohrkörper 4 ausgebildeten Streckwerkträger 3 angeschlossen. Zum Anschluss von Spinnmaschinenaggregaten, insbesondere des Streckwerks 7 an die Luftstromversorgungseinheit, weist der Rohrkörper 4 im Abstand voneinander angeordnete Anschlussstutzen 11 mit Anschlussöffnungen 5 auf. Ein durch den Rohrkörper 4 geleiteter Luftstrom 13 kann bedarfsweise über die Anschlussstutzen 11 angezapft werden.

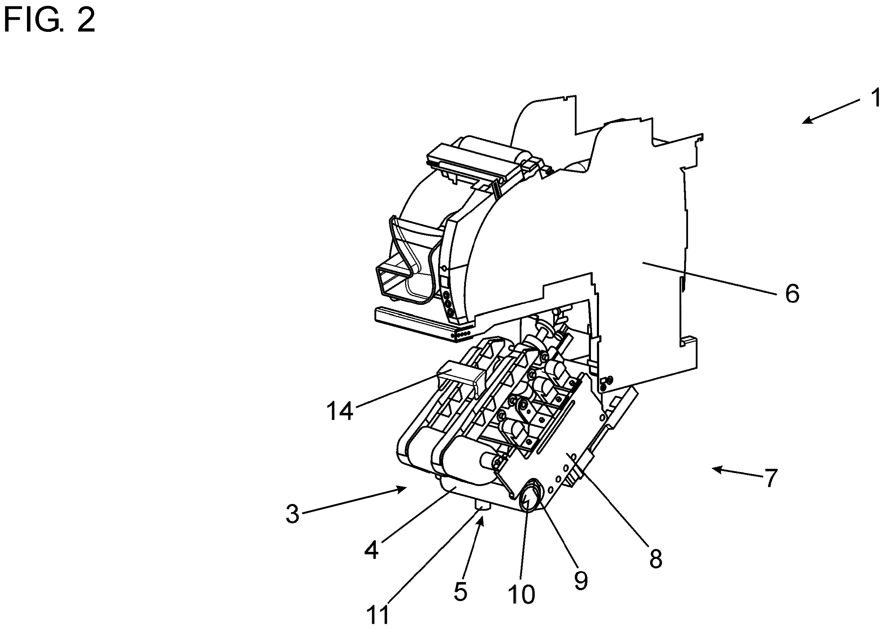

Der als Rohrkörper 4 ausgebildete Streckwerkträger 3 dient neben einer Durchleitung des Luftstroms 13 ferner zur lösbaren Anordnung eines Streckwerks 7 an einer Spinnstelle 1 der Luftspinnmaschine 6. Ein Tragrahmen 8 des Streckwerks 7 weist hierzu eine Ausnehmung 9 auf, welche an den Außendurchmesser des Rohrkörpers 4 angepasst ist. Ein als Griffelement 14 ausgebildeter Handgriff erleichtert eine Verstellung der Oberwalzen des Streckwerks gegenüber den Unterwalzen, sowie im verriegelten Zustand, ein Verschwenken des Streckwerks um den Rohrkörper 4. Das Innere des Rohrkörpers 4 des Streckwerkträgers 3 bildet einen Längskanals 10 zur Durchleitung des Luftstroms 13, welcher über die Anschlussöffnungen 5 der Anschlussstutzen 11 bedarfsweise abgenommen werden kann (vgl. Fig. 2).

### Bezugszeichenliste

- 1: Spinnstelle
- 2: Luftstromversorgungseinheit
- 3: Streckwerkträger
- 4: Rohrkörper
- 5: Anschlussöffnung
- 6: Luftspinnmaschine
- 7: Streckwerk
- 8: Tragrahmen
- 9: Ausnehmung
- 10: Längskanal
- 11: Anschlussstutzen
- 12: Luftstromregelung
- 13: Luftstrom
- 14: Griffelement

## Patentansprüche

1. Spinnmaschine mit mehreren Spinnstellen (1), mit
- einer Luftstromversorgungseinheit (2) zur Bereitstellung von Druck- und/oder Saugluft an den Spinnstellen (1) und
- einem sich entlang der Spinnstellen (1) erstreckenden Streckwerkträger (3) zur lösbaren Anordnung von Streckwerken (7) an den Spinnstellen (1)
**dadurch gekennzeichnet, dass**
der Streckwerkträger (3) als längskanalisierter, mit der Luftstromversorgungseinheit (2) in Strömungsverbindung stehender Rohrkörper (4) ausgebildet ist, der den einzelnen Spinnstellen (1) zugeordnete Anschlussöffnungen (5) aufweist.

2. Spinnmaschine nach Anspruch 1, **dadurch gekennzeichnet, dass** der Rohrkörper (4) und/oder der Längskanal (10) einen kreisförmigen Querschnitt aufweist.

3. Spinnmaschine nach Anspruch 1 oder 2, **gekennzeichnet durch** eine mit der Luftstromversorgungseinheit (2) verbundene Luftstromregelung (12).

4. Spinnmaschine nach Anspruch 3, **dadurch gekennzeichnet, dass** die Luftstromregelung (12) in einem Gehäuse einer Spinnmaschinensteuereinheit angeordnet ist.

5. Spinnmaschine nach Anspruch 3 oder 4, **dadurch gekennzeichnet, dass** die Luftstromregelung (12) in Längsachsenrichtung des längskanalisierten Rohrkörpers (4) oder in einem Abschnitt des längskanalisierten Rohrkörpers (4) angeordnet ist.

6. Spinnmaschine nach einem oder mehreren der vorhergehenden Ansprüche, **dadurch gekennzeichnet, dass** der Rohrkörper (4) mehrteilig, insbesondere zum Anschluss weiterer Rohrkörper (4) ausgebildet ist.

7. Spinnmaschine nach einem oder mehreren der vorhergehenden Ansprüche, **dadurch gekennzeichnet, dass** die Anschlussöffnung (5) mit einer Anschlussleitung, insbesondere flexiblen Anschlussleitung zum strömungsdichten Anschluss der Spinnstellen (1), insbesondere des Streckwerks (7) an den Rohrkörper (4) verbunden ist.

8. Spinnmaschine nach einem oder mehreren der vorhergehenden Ansprüche, **dadurch gekennzeichnet, dass** die Anschlussöffnungen (5) mit Mitteln zur Regelung des Luftstroms durch die Anschlussöffnung (5) ausgebildet sind.
